# FASCICULE DE BREVET EUROPEEN

(11) **EP 3 899 225 B1**
(45) Date de publication et mention de la délivrance du brevet: **10.07.2024**
(21) Numéro de dépôt: 19813367.0
(22) Date de dépôt: 09.12.2019
(51) Int. Cl.: F01P 7/16

(54) **DISPOSITIF DE GESTION THERMIQUE D'UN CIRCUIT DE FLUIDE CALOPORTEUR D'UN VÉHICULE HYBRIDE**
VORRICHTUNG ZUR THERMISCHEN BEHANDLUNG EINES WÄRMETRANSFERFLÜSSIGKEITSKREISES EINES HYBRIDFAHRZEUGS
THERMAL MANAGEMENT DEVICE FOR A HEAT-TRANSFER FLUID CIRCUIT OF A HYBRID VEHICLE

(30) Priorité: 21.12.2018 FR 1873752
(43) Date de publication de la demande: 27.10.2021
(73) Titulaire: Renault s.a.s, 92100 Boulogne Billancourt (FR)
(72) Inventeur: YU, Robert, 78180 MONTIGNY LE BRETONNEUX (FR)
(74) Mandataire: Renault Group
(86) Numéro de dépôt international: PCT/EP2019/084241
(87) Numéro de publication internationale: WO 2020/126619

(56) Documents cités:
- WO-A1-2011/045496
- DE-A1- 102017 011 430
- FR-A1- 2 962 380
- JP-B2- 3 292 080

## Description

La présente invention concerne un dispositif de gestion thermique pour véhicule, lequel comporte différentes typologies d'organes fonctionnels du groupe motopropulseur, dont le management thermique est à contrôler.

Dans un véhicule actuel, il existe un besoin en management thermique à plusieurs seuils ou niveaux de température. A titre d'exemple, il est nécessaire d'opérer un management thermique selon un premier seuil de températures pouvant être compris entre 90° et 105°C pour un premier type d'organes fonctionnels. D'autres besoins en management thermique sont également nécessaires pour des deuxième et troisième organes fonctionnels selon respectivement des deuxième et troisième seuils de température compris entre 40 et 80° pour l'un et entre 0 et 40°C pour l'autre.

Il est ainsi nécessaire de contrôler la température de portions différentes d'un circuit de circulation d'un fluide caloporteur d'un véhicule afin d'adapter au plus juste la température du fluide caloporteur à la température nominale de fonctionnement de l'organe à refroidir. Parmi les différentes portions du circuit de circulation du fluide caloporteur, nous adopterons par la suite les acronymes « TBT », pour Très Base Température correspondant au troisième seuil de température, « BT » pour Basse Température correspondant au deuxième seuil de température, et « HT » pour Haute Température correspondant au premier seuil de température.

La portion TBT comprend une branche principale qui peut être destinée à la gestion thermique d'un moyen de stockage d'énergie, telle une batterie d'accumulateurs d'énergie électrique. Dans le cas d'un véhicule à propulsion électrique ou hybride, la branche principale de la portion TBT peut également comprendre un refroidisseur destiné au transfert de frigories d'un fluide réfrigérant vers un fluide caloporteur. La portion TBT peut également comprendre un réchauffeur, notamment de type électrique, tel que des thermistances à coefficient de température positif destinées au transfert de calories vers le fluide caloporteur. La branche principale de la portion TBT peut également comprendre une pompe hydraulique qui est destinée à l'écoulement du fluide caloporteur au travers des organes fonctionnels précédemment mentionnés, à savoir le refroidisseur et/ou le réchauffeur et/ou la batterie. Préférentiellement, ces organes fonctionnels en échange thermique avec le fluide caloporteur sont disposés en série dans la branche principale de la portion TBT.

Dans le cas d'un véhicule à propulsion électrique ou hybride, une branche principale de la portion BT peut comprendre des échangeurs de chaleur visant respectivement à refroidir un module de pilotage comportant une électronique de puissance, une machine électromotrice, souvent un moteur électrique d'entraînement du véhicule. La portion BT du circuit de circulation du fluide caloporteur pour un véhicule équipé d'un moteur thermique peut également comprendre un refroidisseur d'air de suralimentation et/ou un condensateur. Préférentiellement, ces organes fonctionnels en échange thermique avec le fluide caloporteur sont disposés en parallèle dans la branche principale de la portion BT.

Dans le cas d'un véhicule ayant un moteur thermique, la branche principale de la portion HT peut comprendre le moteur lui-même dans lequel sont ménagés des canaux internes au travers desquels le fluide caloporteur est apte à réaliser un échange thermique, mais aussi un bocal de dégazage, un aérotherme pour le chauffage de l'habitacle, un refroidisseur d'huile ainsi qu'une pompe permettant de piloter la mise en mouvement du fluide caloporteur dans le portion HT. Préférentiellement, ces organes fonctionnels en échange thermique avec le fluide caloporteur sont disposés en parallèle dans la branche principale de la portion HT.

Il est connu d'associer la branche principale de la portion TBT, BT ou HT à une branche de refroidissement dans laquelle est disposé un radiateur. C'est la raison pour laquelle, les véhicules traditionnels de type hybride comprennent des radiateurs distincts qui sont respectivement adaptés aux besoins nominaux de refroidissement des portions TBT, BT et HT. Ces besoins de refroidissement imposent des dimensionnements spécifiques des radiateurs qui sont alors alloués chacun à un fonctionnement exclusif à l'une des portions TBT, BT ou HT. C'est la raison pour laquelle chacun des radiateurs est disposé dans une branche de refroidissement qui est reliée à l'une des branches principales des portions TBT, BT et HT. Il existe des difficultés d'implantation de ces radiateurs en face avant du véhicule, du fait d'une augmentation des faisceaux d'échanges thermiques pour répondre au besoin croissant d'échanges thermiques avec l'air de refroidissement.

Un inconvénient relevé réside dans la conception même du circuit de circulation du fluide caloporteur et notamment dans le fait que les portions de circuit sont chacune associée à un unique échangeur thermique conformé selon le besoin en refroidissement de la portion considérée. Une telle conséquence vient en contradiction des exigences de style et environnementales qui visent à réduire la consommation du véhicule. Cela engendre aussi des problématiques d'intégration compte tenu de l'espace de plus en plus restreint qui est alloué au positionnement des éléments de refroidissement Un tel dispositif de gestion thermique est montré dans WO 2011/045496 A1.

L'objet de la présente invention vise à apporter une solution aux inconvénients en proposant un dispositif de gestion thermique comprenant un circuit de fluide caloporteur d'un véhicule hybride comportant des branches principales dans chacune desquelles est disposé au moins un organe fonctionnel à refroidir, chacune des branches principales ayant un seuil de température nominale de fonctionnement, le dispositif comportant des branches secondaires, le dispositif comportant des branches de refroidissement du fluide caloporteur circulant dans le circuit avec un fluide de refroidissement traversant des radiateurs.

De manière particulière, le dispositif de gestion thermique comprend des moyens de connexion fluidique aptes à relier au moins une des branches de refroidissement à au moins l'une des branches secondaires et/ou à au moins l'une des branches principales pour créer une boucle de circulation isolée du reste du circuit, ou une boucle de circulation reliée au reste du circuit de manière à relier une branche principale à au moins deux branches de refroidissement de telle sorte qu'au moins deux radiateurs sont destinés à être traversés par le fluide de refroidissement selon une situation de fonctionnement instantané du véhicule choisi parmi plusieurs modes de fonctionnement prédéterminés (M1, M2, M3, M4, M5). Le dispositif de gestion de l'invention peut également comprendre les caractéristiques suivantes, prises séparément ou en combinaison entre elles.

Le dispositif de gestion peut comprendre au moins des première, second et troisième branches principales, la première branche principale a une température nominale compris entre 90°C et 105°C, la seconde branche principale a une température nominale compris entre 40°C et 80°C, et la troisième branche principale a une température nominale compris entre 0°C et 40°C.

Le dispositif peut comprendre un radiateur haute température, un radiateur basse température et un radiateur très basse température disposés respectivement dans les première, seconde et troisième branches de refroidissement.

Le dispositif peut comprendre au moins des première, deuxième et troisième branches secondaires, chacune étant du type d'une conduite de circulation du fluide.

Le dispositif se caractérise en ce que les modes de fonctionnement prédéterminés comprennent au moins un mode thermique pure, un mode électrique pure, un mode hybride, un mode de recharge des batteries via un chargeur intégré au véhicule, et un mode de recharge des batteries via un chargeur externe au véhicule.

Le dispositif se caractérise en ce que chacune des branches secondaires peut être reliée à l'une quelconque des branches principales par ledit moyen de connexion fluidique.

Le dispositif se caractérise en ce que chacune des branches principales peut être reliée à plusieurs branches de refroidissement par ledit moyen de connexion fluidique, de telle sorte que les radiateurs peuvent être utilisés en série ou en parallèle pour différents modes de fonctionnement prédéterminés du véhicule.

Le dispositif se caractérise en ce que le moyen de connexion fluidique comprend des vannes à quatre voies et une vanne à trois voies.

Le dispositif se caractérise en ce que le moyen de connexion fluidique est apte à relier en série ou en parallèle les première et troisième branches de refroidissement dans le mode de fonctionnement soit en thermique pure ou en hybride lorsque la température ambiante est supérieure à une valeur de seuil thermique comprise entre 20° et 40°C afin de refroidir notamment le moteur thermique, soit en électrique pure ou en recharge des batteries via un chargeur intégré au véhicule lorsque la température de la batterie est inférieure à une valeur de seuil thermique comprise entre 40°C et 55°C, afin d'utiliser uniquement le fluide caloporteur pour refroidir la batterie. En outre, lorsque la température de la batterie est supérieure à une valeur de seuil thermique comprise entre 40°C et 55°C, la batterie 40 est refroidie par le refroidisseur de type fluide caloporteur/fluide réfrigérant.

Le dispositif se caractérise en ce que le moyen de connexion fluidique est apte à relier en série les seconde et troisième branches de refroidissement dans les modes de fonctionnements en thermique pure ou en hybride lorsque une température du fluide caloporteur prélevée en sortie de la seconde branche principale est supérieure ou égale à 70°C,et en ce que la batterie est disposée dans une boucle de refroidissement indépendante mettant en série la troisième branche principale avec la troisième branche secondaire de sorte que seul un refroidisseur de type échangeur de chaleur entre le fluide caloporteur et un fluide réfrigérant est apte à refroidir la batterie. Dans ce cas, la première branche de refroidissement est dissociée des seconde et troisième branches de refroidissement de telle sorte que le fluide caloporteur circule dans la première branche de refroidissement indépendamment du fluide caloporteur circulant dans les seconde et troisième branches de refroidissement. Le circuit de refroidissement comporte ainsi trois boucles distinctes de circulation du fluide caloporteur. Les boucles HT et BT permettent un refroidissement sur air du fluide caloporteur, la boucle TBT permettant un refroidissement sur fluide réfrigérant du fluide caloporteur destiné au refroidissement de la batterie.

Le dispositif se caractérise en ce que le moyen de connexion fluidique est apte à relier les première et seconde branches de refroidissement dans le mode de fonctionnement en électrique pure ou en recharge des batteries via un chargeur intégré au véhicule. Le faisceau de refroidissement est ainsi constitué des échangeurs thermiques traversés en série par le fluide caloporteur des première et seconde branches de refroidissement ce qui améliore le refroidissement de l'électronique de puissance et de la machine électrique. La troisième branche de refroidissement est dissociée des première et seconde branches de refroidissement de telle que la batterie peut être refroidie soit par la troisième branche de refroidissement lorsque la température de la batterie est inférieure à une valeur de seuil thermique comprise entre 40°C et 55°C. En cas de besoin supplémentaire de refroidissement de la batterie, des frigories d'un fluide réfrigérant sont transmises au fluide caloporteur via un échangeur thermique entre le fluide caloporteur et un fluide réfrigérant disposé en amont de la batterie.

Le dispositif se caractérise en ce que le moyen de connexion fluidique est apte à relier la troisième banche principale aux les première, deuxième et troisième branches de refroidissement lorsque le véhicule est dans un mode de fonctionnement en recharge des batteries via un chargeur externe au véhicule, de telle sorte que l'ensemble des échangeurs thermiques des première et troisième branches de refroidissement sont disposées en parallèle, cet ensemble d'échangeur thermique étant disposé en série avec la deuxième branche de refroidissement lorsque la température de la batterie est inférieure à une valeur de seuil thermique comprise entre 40°C et 55°C et que la température ambiante est inférieure à une valeur de seuil thermique comprise entre 20° et 40°C.

Le dispositif se caractérise en ce que le moyen de connexion fluidique est apte à relier la deuxième branche principale aux première, deuxième et troisième branches de refroidissement lorsque le véhicule est dans un mode de fonctionnement en électrique pure ou en recharge des batteries via un chargeur intégré au véhicule, de telle sorte qu'un ensemble des échangeurs thermiques des première et troisième branches de refroidissement sont disposées en parallèle, cet ensemble d'échangeurs thermiques étant disposé en série avec la deuxième branche de refroidissement, la troisième branche principale étant dissociée de la deuxième branche principale de telle sorte que les batteries sont refroidies par le fluide réfrigérant, lorsque que la température ambiante est supérieure à une valeur de seuil thermique comprise entre 20° et 40°C.

D'autres avantages et caractéristiques de l'invention apparaîtront au cours de la description qui suit d'un mode préféré de réalisation de l'invention, donné à titre d'exemple non limitatifs, en référence aux dessins annexés.
La figure 1 illustre schématiquement un circuit de circulation d'un fluide caloporteur d'un véhicule hybride, selon l'invention.
La figure 2 illustre schématiquement les moyens de pilotage de l'écoulement du fluide mise en oeuvre dans le circuit de la figure 1.
La figure 3 illustre schématiquement une table d'états de fonctionnement des moyens de pilotage de la figure 2 permettant différents modes de fonctionnement du circuit de circulation du fluide caloporteur selon la typologie de mode de traction du véhicule.

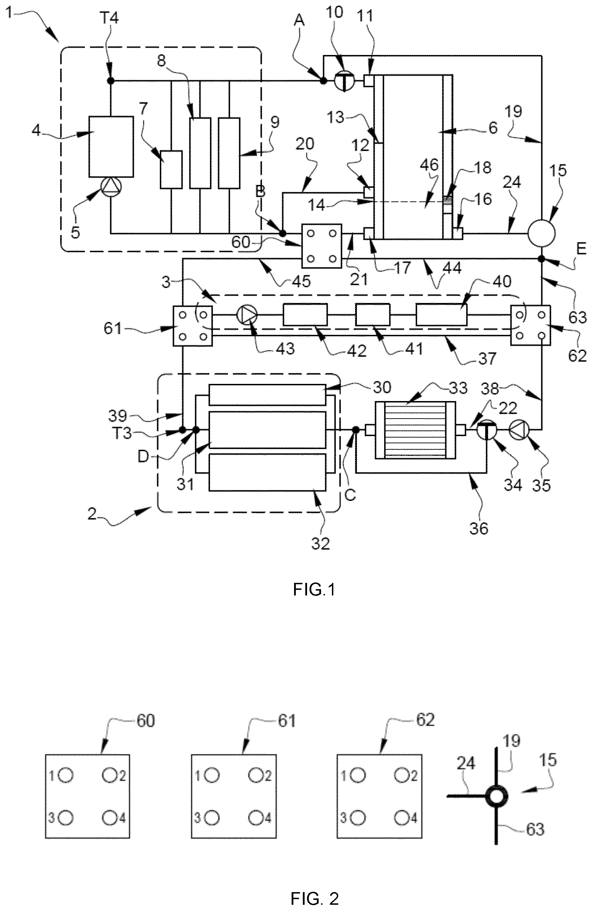

La figure 1 représente un dispositif de gestion thermique d'un circuit de circulation d'un fluide caloporteur d'un véhicule hybride comportant des portions HT, BT et TBT de refroidissement dans lesquelles sont disposées des première, deuxième et troisième branches principales 1, 2, 3 d'échanges thermiques avec un organe fonctionnel. Compte tenu de la typologie de l'organe fonctionnel, il est positionné dans l'une des première, deuxième et troisième branches principales 1, 2, 3 afin de le réguler thermiquement tant par un apport de frigories que de calories selon la cible thermique prédéfinie. Au démarrage du véhicule, il est parfois utile d'opérer un réchauffage qui sera par la suite transformé par un refroidissement.

La première branche principale 1 comprend des organes fonctionnels disposés en parallèle, de telle sorte que chacun de ces organes à manager thermiquement est positionné dans une des sous-branches principales. L'une des sous-branches principales comprend le moteur 4, une autre comprend un bocal de dégazage 7, une autre comprend un aérotherme 8 et enfin une autre comprend un refroidisseur d'huile 9. Une pompe principale 5 est positionnée directement en amont d'un bloc moteur 4. Une circulation du fluide caloporteur au travers de ces organes fonctionnels permet de créer un échange thermique de sorte qu'il est rendu possible de prélever des calories du moteur 4 pour les restituer à l'aérotherme 8 et/ou au refroidisseur d'huile 9. Il peut aussi être réalisé un transfert de calories du refroidisseur d'huile 9 vers l'aérotherme 8 et/ou le moteur 4 durant notamment une phase de montée en température du moteur 4 lorsque la pompe principale 5 est activée. La pompe principale 5 est préférentiellement de type mécanique en ce sens qu'elle est entraînée à rotation par l'intermédiaire d'une courroie d'accessoire reliée par le biais d'une poulie à l'arbre de vilebrequin du moteur 4 à combustion. La première branche principale 1 est une partie constitutive d'une portion HT du circuit de circulation du fluide caloporteur.

La deuxième branche principale 2 comprend des organes fonctionnels disposés en parallèle, de telle sorte que chacun de ces organes à manager thermiquement est positionné dans une des sous-branches principales 30, 31, 32 parallèles entre elles. L'une des sous-branches principales 30 comprend l'électronique de puissance pilotant le fonctionnement d'un machine électrique disposée dans une autre sous-branches 31 pourvue d'un échangeur thermique dédié. Une troisième sous-branche principale 32 comprend un condenseur de climatisation, un échangeur thermique de gaz recirculé, connu sous l'acronyme anglais EGR pour Exhaust Gas Recirculation, ainsi qu'un échangeur d'air de suralimentation connu sous l'acronyme RAS.. Ces trois sous-branches principales sont reliées en amont à un même point de jonction d'entrée, en aval à un même point de jonction de sortie, les termes « amont » et « aval » étant déterminés selon un sens de circulation du fluide donné par la mise en fonctionnement d'une pompe secondaire 35. Le pompe secondaire 35 est préférentiellement de type électrique et est positionnée en amont du point de jonction d'entrée de telle sorte qu'une circulation du fluide caloporteur au travers de ces organes fonctionnels permet de créer un échange thermique. Il est de la sorte rendu possible de soit prélever des calories de l'électronique de la sous-branche 30, de la machine électrique de la sous-branche 31 et/ou du refroidisseur d'air de suralimentation, d'un condenseur de climatisation, d'un échangeur thermique de gaz recirculé, ainsi qu'un échangeur d'air de suralimentation appartenant à la troisième sous-branche principale 32, soit de réchauffer ces organes fonctionnels en opérant un transfert de calories du fluide caloporteur préalablement réchauffé par d'autres organes fonctionnels lorsque la pompe secondaire 35 est activée, en positionnant par exemple en série au moins deux des branches principales 1, 2, 3.

La deuxième branche principale 2 est une partie constitutive d'une portion BT du circuit de circulation du fluide caloporteur.

La troisième branche principale 3 du circuit comprend des organes fonctionnels disposés en série. Une deuxième pompe secondaire 43, un refroidisseur 42 de type fluide caloporteur/fluide réfrigérant, un réchauffeur 41 notamment de type à thermistances à coefficient de température positif, sont agencés en amont d'un pack de batteries de stockage d'énergie électrique 40. Le refroidisseur 42 est positionné en amont du pack de batteries 40 de sorte qu'il est apte à fournir des frigories au fluide caloporteur circulant dans la troisième branche principale 3, lorsque la deuxième pompe secondaire 43 est activée. Cette dernière peut être de type électrique. Le réchauffeur 41 est positionné en amont du pack de batteries 40 de sorte qu'il est apte à fournir des calories au fluide caloporteur circulant dans la troisième branche principale 3, lorsque la deuxième pompe secondaire 43 est activée et que simultanément le réchauffeur 41 est alimenté en électricité. La troisième branche principale 3 est une partie constitutive d'une portion TBT du circuit de circulation du fluide caloporteur.

Le circuit de circulation d'un fluide caloporteur comprend aussi des branches de refroidissement, chacune comportant un radiateur destiné à être traversé par un air de refroidissement afin de refroidir le fluide caloporteur. Par le biais de moyens de connexion fluidique, préférentiellement des vannes multivoies, les branches de refroidissement peuvent être disposée en série. Cela ouvre la possibilité d'une circulation du fluide caloporteur dans au moins deux radiateurs positionnés en série dans le circuit de circulation du fluide caloporteur par le biais desdits moyens de connexion fluidique. Il devient ainsi possible de communaliser des faisceaux de radiateurs, ce qui permet d'en réduire la dimension de sorte que leur encombrement en face avant du véhicule est facilité.

Une première branche de refroidissement 20 comprend un radiateur 6 qui est conçu pour recevoir un fluide caloporteur de la portion HT du circuit. La branche de refroidissement comporte aussi un thermostat 10 positionné en amont du radiateur 6 qui contrôle l'écoulement du fluide caloporteur au sein du radiateur selon sa température de telle sorte qu'au-delà d'une certaine valeur de seuil, le fluide caloporteur circule à l'intérieur du radiateur 6 pour y être refroidi par l'air de refroidissement traversant le faisceau de ce dernier. L'air de refroidissement peut être obtenu par le déplacement du véhicule ou bien par le biais d'un ventilateur.

Une branche de contournement 19 permet au besoin de créer avec la première branche principale une boucle HT dans laquelle le fluide caloporteur n'est pas refroidi par l'air de refroidissement. Une telle situation de fonctionnement intervient par exemple dans la phase de démarrage de moteur durant laquelle il est recherché une montée en température rapide du moteur 4 pour en limiter les émissions de polluants.

Le circuit comprend une deuxième branche de refroidissement 24 dans laquelle un deuxième radiateur 33, un thermostat 34 et une deuxième branche de contournement 36 sont reliés entre eux. Le thermostat 34 est positionné en amont du deuxième radiateur 33. La deuxième voie de contournement 36 est par l'une de ses extrémités reliée au thermostat 34, par l'autre de ses extrémités à la sortie du deuxième radiateur 33. Le thermostat 34 est calibré de sorte que le fluide caloporteur circule dans le deuxième radiateur 33 lorsque sa température est comprise entre 60°C et 70°C afin de réguler thermiquement les organes fonctionnels des sous-branches 30, 31, 32 parallèles disposées en aval du deuxième radiateur 33. En deçà de cette température, le fluide caloporteur circule au travers de la deuxième branche de contournement 36. Un moyen de ventilation approprié permet au besoin de créer un air pulsé traversant le deuxième radiateur 33. Il peut s'agir du même moyen utilisé pour forcer l'air à circuler au travers du radiateur 6 de la portion HT du circuit, lorsque les premier et deuxième radiateurs 6 et 33 sont agencés selon un empilement de l'un contre l'autre.

Le circuit comprend une troisième branche de refroidissement 24 dans laquelle est disposé un troisième radiateur 46 qui est apte à maintenir la température du fluide caloporteur dans une plage de température comprise entre 0 et 40°C. Le troisième radiateur 46 est ainsi préférentiellement conçu pour réguler thermiquement la température du fluide caloporteur circulant dans la portion TBT du circuit.

Le dispositif comportant des branches secondaires 37, 44, 45 reliant des moyens de connexion fluidique entre eux pour réaliser soit des boucles isolées de circuit dans lesquelles sont disposées au moins une des branches principales, soit des boucles comportant plusieurs branches de refroidissement en communication avec au moins une des branches principales.

Pour ce faire, le dispositif de gestion thermique comprend des moyens de connexion fluidique qui sont directement reliés aux branches secondaires. Lesdits moyens de connexion sont préférentiellement des vannes multivoies. Le dispositif de gestion comprend ainsi des première, deuxième et troisième vannes 60, 61, 62 à quatre voies et une vanne à trois voies 15. Les vannes à quatre voies sont conçues de manière qu'au moins une voie puisse être mise en relation avec au moins une des trois autres voies. La vanne trois est conçue de manière qu'au moins une voie puisse être mise en relation avec l'une des deux autres voies.

La première branche secondaire 37 relie les deuxième et troisième vannes 61, 62 à quatre voies. La deuxième branche secondaire 44 relie la première vanne à quatre vois 60 à la vanne à trois voies 15. La troisième branche secondaire 45 relie les première et deuxième vannes à quatre voies 60, 61.

Le circuit comprend des points de jonction à plusieurs portions de circuits. Le premier point de jonction A est apte à connecter la sortie de la première branche principale 1 à la première branche de refroidissement 20 et à la branche de contournement 19. Le deuxième point de jonction B est apte à connecter la première vanne à quatre voies 60 à la première branche de refroidissement 20 et l'entrée de la première branche principale 1. Le troisième point de jonction C est apte à connecter les sorties de la troisième branche de refroidissement 24 et de la deuxième vanne de contournement 36 à l'entrée de la deuxième branche principale 2, laquelle comprend une ramification à trois sous-branches référencées 30, 31, 32 sur la figure 1. Le quatrième point de jonction D est apte à connecter la sortie de la deuxième branche principale 2, à savoir chacune des sous-branches 30, 31, 32 formant la ramification associée aux organes fonctionnels à refroidir. à la deuxième vanne à quatre voies 61. Les trois sous-branches 30, 31, 32 sont ici disposées en parallèle les unes aux autres. Le cinquième point de jonction E est apte à relier l'ensemble de vannes formé par les première et troisième vannes à quatre voies 60, 62 avec la vanne à trois voies 15.

La première vanne 60 comprend quatre voies numérotée 1-60, 2-60, 3-60 et 4-60 comme cela est représenté sur la figure 2. La voie n°1-60 est reliée à la première branche principale 1 ainsi qu'à une bride 12 du premier radiateur 6 par la première branche de refroidissement 20, chacune étant connectée à un deuxième point B de jonction. La voie n°2-60 est reliée à une bride 17 du troisième radiateur 46 par une conduite 21. La voie n°3-60 est reliée à la voie n°1-61 de la deuxième vanne 61 à quatre voies par la troisième branche secondaire 45. La voie n°4-60 est reliée directement à un cinquième point de jonction E assurant la liaison en fluide avec la vanne à trois voies 15 et une voie n°2-62 de la troisième vanne à quatre voies 62.

La deuxième vanne à quatre voies 61 comprend quatre voies numérotée 1-61, 2-61, 3-61 et 4-61 comme cela est représenté sur la figure 2. La voie n°1-61 est reliée à la voie n°3-60 par la troisième branche secondaire 45. La voie n°2-61 est reliée à l'entrée de la troisième branche principale 3. La voie n°3-61 est reliée à la deuxième branche principale 2, notamment par l'intermédiaire du quatrième point de jonction D. La voie n°4-61 est reliée directement à la voie n°3-62 de la troisième vanne à quatre voies 62 par la première branche secondaire 37.

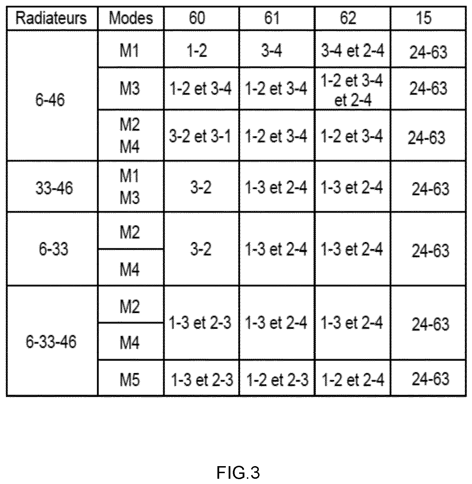

Une telle architecture du circuit optimise l'utilisation des premier, deuxième et troisième radiateurs 6, 33 et 46 selon les différents modes de fonctionnement du véhicule parmi mode thermique pure M1, un mode électrique pure M2, un mode hybride thermique et électrique M3, un mode de recharge par l'utilisation d'un chargeur embarqué sur le véhicule M4 et un mode de recharge par l'utilisation d'un chargeur de station de recharge M5, donc externe au véhicule. Les moyens de connexion sont pilotés de manière à associer au moins deux radiateurs, voire trois radiateurs, à un mode de fonctionnement. Cela permet avantageusement d'augmenter la surface du faisceau d'échange thermique. Chacun des radiateurs peut ainsi être de dimension réduite, ce qui facile leur intégration dans le véhicule. La figure 3 décrit une table de pilotage des moyens de connexion selon les différents modes de fonctionnement du véhicule afin de réaliser quatre associations possibles de radiateurs.

Les moyens de connexion comprennent en outre un moyen de mesure de la température du fluide caloporteur en sortie du moteur 4, ainsi qu'un moyen de mesure de l'air ambiant, tel un capteur de température bien connu dans le domaine, de telle sorte que pour une température T4 comprise entre 70°C et 100°C et une température de l'air ambiant est supérieure à une valeur de seuil thermique comprise entre 20° et 40°C, les premier et troisième radiateurs 6 et 46 sont traversés par le fluide caloporteur. Cela permet d'augmenter notamment le refroidissement du moteur 4 du véhicule en mode thermique pure M1. Pour cette même plage de température, en mode hybride thermique et électrique M3, les premier et troisième radiateurs 6 et 46 sont également traversés par le fluide caloporteur de sorte qu'ils permettent le refroidissement notamment du moteur thermique 4, tandis que le refroidisseur 42 est traversé par un fluide calopoteur circulant dans une boucle indépendante de la boucle du moteur thermique afin de refroidir la batterie 40 . En mode de roulage électrique pur M2 ou en mode de recharge par chargeur du véhicule M4, lorsque la température de batteries est inférieure à une valeur de seuil thermique de 40°C à 55°C, les premier et troisième radiateurs 6 et 46 sont traversés par le fluide caloporteur pour refroidir la batterie 40 uniquement. Les première et deuxième branches de refroidissement 20 et 22 sont disposées en série par lesdits moyens de connexion qui sont pilotées afin de relier ensemble des voies pour rendre apte l'agencement en série des premier et troisième radiateurs 6 et 46.

Les moyens de connexion sont aptes à créer l'association des deuxième et troisième radiateurs 33 et 46 en tenant compte d'une température mesurée du fluide caloporteur en sortie de la deuxième branche principale 2 et de la température ambiante Ta de telle sorte que pour une température T3 supérieure à 70°C et une température ambiante supérieure à la valeur de seuil thermique comprise entre 20° et 40°C, les deuxième et troisième radiateurs 33 et 46 sont successivement traversés par le fluide caloporteur. Cela permet de refroidir les composants de la sous-branches 32 en mode thermique pure M1. Toujours pour une température T3 supérieur à 70°C, en mode hybride thermique et électrique M3, les deuxième et troisième radiateurs 33 et 46 sont également traversés successivement par le fluide caloporteur de sorte que les deuxième et troisième radiateurs refroidissent la sous-branche 32 tandis que le refroidisseur 42 refroidit la batterie 40 disposées alors dans une boucle de refroidissement indépendante. Les deuxième et troisième branches de refroidissement 22 et 24 sont disposées en série par lesdits moyens de connexion, dont les voies sont reliées les unes aux autres afin de rendre apte l'agencement en série des deuxième et troisième radiateurs 33 et 46. La troisième branche principale 3 est reliée à la première branche secondaire 37 de sorte qu'elles forment une boucle de refroidissement indépendante du reste du circuit, où seul le refroidisseur 42 transmets des frigories à la batterie. Les moyens de connexion sont pilotés de manière à créer une boucle de refroidissement comportant des deuxième et troisième branches de refroidissement 22 et 24 alors positionnées en série.

Les moyens de connexion sont également aptes à disposer les premier et deuxième radiateurs 6 et 33 en série lorsque le véhicule est en mode de roulage électrique pur M2 ou en mode de recharge via le chargeur embarqué sur le véhicule M4. Pour le mode de roulage électrique pur M2 ou le mode de recharge via le chargeur embarqué sur le véhicule M4, lorsque la température ambiante est supérieure à une valeur de seuil thermique comprise entre 20° et 40°C, les première et deuxième branches de refroidissement 20, 22 sont disposées en série afin de refroidir la seconde branche principale 2 contenant l'électronique de puissance et la machine électrique des sous-branches 30 et 31. La troisième branche principale 3 contenant les batteries 40 est refroidie uniquement par le refroidisseur 42 du fait que cette troisième branche principale est reliée à la première branche secondaire 37 afin de former une boucle de refroidissement isolée du reste du circuit..

Les moyens de connexion sont également aptes à disposer les premier et troisième radiateurs 6 et 46 en parallèle, ces radiateurs étant disposés en série avec le deuxième radiateur 33 dans le circuit de refroidissement lorsque le véhicule est en mode de roulage électrique pur M2 ou en mode de recharge via le chargeur embarqué sur le véhicule M4 pour refroidir la seconde branche principale 2, ou en mode de recharge sur station M5 pour refroidir la batterie tant que la température de batterie est inférieure à une valeur de seuil thermique comprise entre 40° et 55°C. Au-delà d'une température de la batterie supérieure à la valeur seuil, le refroidisseur 42 interviendra pour refroidir la batterie 40.

La seconde branche principale 2 est dédiée au refroidissement d'organes fonctionnels à basse température, comprise par exemple entre 40 et 80°C. Cette branche inclut des sous-branches principales 30, 31, 32 dans lesquels sont disposés des organes fonctionnels. L'une des sous-branches principales 30 comprend l'électronique de puissance tel qu'un onduleur et un chargeur. Une seconde des sous-branches principales 31 comprend l'organe de traction électrique, tel qu'une machine électrique. Une troisième sous-branche principale 32 comprend un condenseur de climatisation, un échangeur thermique de gaz recirculé, connu sous l'acronyme anglais EGR pour Exhaust Gas Recirculation, ainsi qu'un échangeur d'air de suralimentation connu sous l'acronyme RAS. La température du fluide caloporteur circulant dans cette seconde branche principale 2 devant être comprise entre 40 et 80 °C, le dispositif de gestion thermique réalise un refroidissement en deux étages de telle sorte que l'échangeur pour EGR et RAS sont refroidis d'abord par le fluide caloporteur circulant dans la première branche de refroidissement 20, avant de circuler au travers du radiateur 33 à basse température.

Une troisième branche principale 3 est destinée à la circulation d'un fluide caloporteur à très basse température, c'est-à-dire inférieure à 40°C, et inclut en série la batterie 40 à refroidir, le refroidisseur 42 thermique entre le fluide caloporteur et le fluide réfrigérant ainsi qu'un moyen de chauffe 41 par résistance chauffante et une pompe 43. La troisième branche principale 3 est dépourvue d'un radiateur ce qui permet d'affiner la température de la batterie notamment dans une phase de démarrage du véhicule. La troisième branche de refroidissement 24 comprend le radiateur 46 pour refroidir la batterie dans des conditions climatiques courantes avec une température inférieure à 25 ou 35°C pour éviter l'utilisation des frigories en provenance d'une boucle d'un circuit de climatisation dans lequel circule le fluide réfrigérant. La connexion très particulière de ce radiateur 46 avec le reste du circuit, notamment avec le radiateur de moteur thermique 6, permet une utilisation du radiateur 46 aussi pour refroidissement tous les autres organes.

Les branches secondaires 37, 44, 45 ne sont pas seulement dédiées à une boucle spécifique de refroidissement HT, BT ou TBT. Au contraire, elles sont destinées à une mise en relation avec au moins une des branches principales 1, 2, 3 selon le mode de fonctionnement de véhicule, lequel peut être : électrique pure, thermique pure, hybride, ou en charge pour charger de batterie ou pour préconditionner thermiquement la batterie, le moteur thermique ou de l'habitacle du véhicule. Lesdits moyens de connexion fluidique comprenant les trois vannes 60, 61, 62 à 4 voies ainsi que la vanne 15 à trois voies pilotent le fonctionnement du circuler afin de réaliser un management thermique du circuit de circulation du véhicule en reliant entre elles les branches principales, les branches secondaires et les branches de refroidissement.

L'architecture même du circuit de refroidissement est tel que le fluide caloporteur ne peut pas circuler sans qu'une ou plusieurs branches secondaires ne soit reliée à l'une des branches principales 2 et 3. Chacune des branches secondaires peut être avantageusement partagée avec au moins l'une des branches principales. Le branchement entre les branches principales et les branches secondaires est assuré par des vannes à 3 ou 4 voies, et le pilotage de ces vannes permet une gestion thermique complète du système.

La branche BT intègre le radiateur 33, car dans tous les modes de refroidissement, ce radiateur est nécessaire, hormis lors du démarrage du moteur thermique où il est recherché une montée en température rapide du moteur qui est obtenue notamment par un contournement du radiateur 33, le fluide caloporteur circulant alors dans la branche de contournement 36. Ce n'est pas le cas pour la troisième branche principale 3, dite branche TBT, où se trouve la batterie. En effet, le radiateur 46 de batterie est disposé dans une branche indépendant, qui est soit utilisée au refroidissement de la batterie lorsqu'une boucle TBT est isolée du reste du circuit, ou lorsque la troisième branche principale 3 est reliée à au moins une autre des branches principales 1, 2 du circuit de fluide, est utilisée au refroidissement des autres organes fonctionnels à refroidir, tel que par exemple le moteur thermique de la première branche principale 1, ou tous les organes présents dans la deuxième branche principale.

Le concept de l'invention est d'utiliser des branches principales dédiées aux organes à refroidir avec les branches secondaires qui sont communes à tous les organes, et de piloter les vannes 60, 61, 62, 15 pour avoir un nombre de configurations augmentées de fonctionnement du circuit afin de le rendre performant dans sa gestion thermique.

Nous proposons ci-dessous qui est constitué par trois boucles HT, BT et TBT indépendantes de refroidissement avec chacune un radiateur, respectivement 6, 33 et 46. Ces boucles sont reliées entre elles par des vannes spéciales à quatre voies 60, 61, 62 ou à trois voies 15. Selon les besoins en échanges thermiques, lesquels dépendent des modes de fonctionnement du véhicule mais aussi de la température nominale de fonctionnement des organes à refroidir qu'elle contient, les organes fonctionnels de ces trois boucles peuvent être refroidis soit de manière indépendante en ce sens que chaque boucle est isolée des autres afin de permettre une régulation thermique à un niveau de température spécifique HT, BT ou TBT, soit de manière dépendante afin qu'au moins une des première, deuxième ou troisième branches principales puisse être aidée thermiquement par le ou les radiateurs d'au moins une autre boucle, voire par le refroidisseur de la troisième branches. En outre, lorsque la température de moteur thermique 4 ou de la batterie 40 n'a pas encore atteint sa température optimale de fonctionnement, les calories dégagées par certains autres organes fonctionnels peuvent être utilisées pour chauffer le moteur thermique et/ou la batterie de traction électrique. Lorsque le chauffage de l'habitacle a été demandé, ces calories transmises au fluide caloporteur par les organes fonctionnels peuvent aussi être utilisées pour réchauffer l'habitacle du véhicule, le fluide caloporteur circulant alors au travers de l'aérotherme 8.

Les trois radiateurs 6, 33 et 46 peuvent non seulement être intégrés dans les trois boucles distinctes de refroidissement à température très différentes, ils peuvent être utilisés par les autres boucles selon le mode de fonctionnement du véhicule, lequel peut être une recharge de la batterie électrique sur une station de recharge ou en préconditionnement via un branchement électrique à une borne d'un réseau de distribution d'électricité, lequel peut être en traction électrique pur afin de réduire à zéro les émissions polluantes liées au roulage du véhicule, lequel peut être en traction thermique pure lorsque le partie de la traction électrique est désactivée, ou lequel peut être en mode traction hybride afin de cumuler l'énergie thermique et l'énergie électrique comme mode de traction du véhicule.

Une autre particularité de ce dispositif réside dans la conception du troisième radiateur HT/TBT 46, qui peut faire partie intégrante de radiateur HT 6, lequel est alors constitué en deux parties distinctives : HT 6 et HT/TBT 46. Ce radiateur unique a des boites à eau verticales reliées entre elles par un faisceau de tubes horizontaux. La séparation de deux radiateurs est matérialisée par une cloison 14 insérée d'un côté de la boite à eau et par un bouchon percé 18 formant des passages verticaux, lequel bouchon percé est inséré dans l'autre côté de la boite à eau situés à la même hauteur. Ce radiateur unique dispose de quatre raccords 11, 12, 16 et 17 de connexion au circuit. Le fluide caloporteur circulant dans le faisceau du radiateur 6 est en communication avec le faisceau du radiateur 46 par l'intermédiaire du bouchon 18 faisant office de réducteur. Lorsque ces deux radiateurs 6 et 46 sont utilisés par deux boucles ayant des températures différentes, le bouchon 18 réduit la circulation du fluide d'une boucle vers une autre boucle ayant une température de régulation différente. Ici le raccord 11 est connecté à la sortie du thermostat 10 du moteur 4, l'autre raccord 12 permet une connexion à l'entrée de la pompe mécanique 5 du moteur. Ces deux premiers raccords 11, 12 se trouvent sur la partie HT du radiateur unique. Les deux autres raccords 16 et 17 se trouvent sur la partie BT/THT de ce radiateur unique.

Selon une alternative de réalisation, le radiateur unique ayant un faisceau HT et un faisceau TBT peut être remplacé par deux radiateurs séparés, chacun ayant un orifice d'interconnexion apte à recevoir un tube assurant la fonction du bouchon de réduction précédemment mentionné. Avec cette variante de réalisation, les deux radiateurs peuvent être disposés dans deux plans différents, avec notamment la possibilité de créer un empilement visant à disposer le radiateur HT/TBT devant le radiateur HT. Le dispositif de gestion thermique a pour avantage de réaliser toutes les configurations d'un circuit de refroidissement performant et optimisé selon le mode de fonctionnement du véhicule. Il permet d'un côté de piloter thermiquement les trois boucles de refroidissement HT, BT et TBT de manière totalement indépendante et selon trois niveaux de température. Il permet aussi une meilleure intégration des échangeurs en face avant du véhicule, du fait de la communalisation des radiateurs pour un même mode de fonctionnement du véhicule. La conception des radiateurs tient compte de cette possibilité d'utilisation d'un même radiateur dans différentes boucles de régulation thermique HT, BT et/ou TBT. Le dispositif de gestion thermique est apte à utiliser simultanément les premier et troisième radiateurs 6 et 46, les deuxième et troisième radiateurs 33 et 46, les premier et deuxième radiateurs 6 et 33, ainsi que les premier, deuxième et troisième radiateurs 6, 33, et 46. Du fait de cette possibilité de communalisation des radiateurs, chacun peut être de taille minimisée, ce qui facilite d'autant leur intégration dans le véhicule.

Dans des modes particulières de fonctionnement, certains organes fonctionnels ne sont pas opérationnels et n'ont donc pas besoin d'être refroidis. De ce cas, les moyens de connexion rendent aptes la circulation du fluide caloporteur dans des branches de refroidissement qui leur sont normalement allouées. La performance du système de refroidissement est ainsi optimisée puisqu'il devient possible d'utiliser pleinement la source froide, notamment les frigories du refroidisseur, pour refroidir les organes fonctionnels. Comparativement aux solutions conventionnelles, où chaque radiateur doit être dimensionné dans des conditions les plus sèvres, la dimension des radiateurs avec le dispositif de gestion de l'invention est réduite. Il devient ainsi possible d'utiliser un même circuit de fluide caloporteur pour différents groupes motopropulseur, certains ayant des puissances augmentées. De manière avantageuse encore, au démarrage à froid, la mise en relation des première, deuxième et/ou troisième branches principales permet au fluide caloporteur de prélever des calories d'organes en fonctionnement pour réchauffer le moteur thermique, la batterie, et/ou l'habitacle du véhicule.

Le dispositif de gestion thermique de l'invention est remarquable en ce qu'il permet une circulation du fluide caloporteur au travers d'une série de radiateurs disposés en série ou en parallèle dans le circuit de fluide caloporteur selon à la fois le mode de fonctionnement du véhicule parmi un mode électrique pure, une mode thermique, un mode hybride, un mode de charge, et les températures instantanées de l'air et/ou du fluide caloporteur. Cela permet de concevoir un circuit de fluide caloporteur avec des composants de refroidissement calibrés pour un fonctionnement nominal du véhicule évoluant dans un environnement à température ambiante prédéterminée, et de maintenir le fonctionnement du véhicule dans un mode choisi même si ce dernier évolue sous d'autres conditions températures. Cela est rendu possible par le recours à au moins un autre des radiateurs, qui était préalablement dans un état inactif, tout du moins pas traversé par un fluide caloporteur étant donné le mode de fonctionnement du véhicule. Il est ainsi rendu possible d'utiliser des radiateurs conçus et dédiés à un mode particulier de fonctionnement du véhicule, pour au moins un autres des modes de fonctionnement du véhicule. Cela amène une communalisation des composants de refroidissement pour différents modes de fonctionnement du véhicule. Par conséquent les composants de refroidissement, principalement les radiateurs, peuvent être d'encombrement plus réduits ce qui en facilite leur intégration sous capot moteur, tout en réduisant d'autant les coûts de fabrication. A titre d'exemple, avec le dispositif de gestion objet de l'invention, la batterie peut être refroidie lors du fonctionnement du véhicule dans un environnement standard par un radiateur dédié et peut être refroidie en plus par un autre radiateur, par exemple le radiateur dédié au refroidissement d'un moteur thermique, lorsque la température de l'air ambiant devient critique, c'est-à-dire plus élevée que la température nominale de fonctionnement. Dans ce cas du management thermique de la batterie, l'air de refroidissement est privilégiée au fluide réfrigérant traversant le refroidisseur pour refroidir la batterie, ce qui permet de réduire la plage d'utilisation du refroidisseur traversé par un fluide réfrigérant, donc le circuit de climatisation du véhicule, ce qui réduit d'autant la consommation du véhicule et ses rejets de polluants.

## Revendications

1. Dispositif de gestion thermique d'un circuit de fluide caloporteur d'un véhicule hybride comportant des branches principales (1, 2, 3) dans chacune desquelles est disposé au moins un organe fonctionnel (4, 7, 8, 9, 40, ) à refroidir, chacune des branches principales ayant un seuil de température nominale de fonctionnement, le dispositif comportant des branches secondaires (37, 44, 45), le dispositif comportant des branches de refroidissement (20, 22, 24) du fluide caloporteur circulant dans le circuit avec un fluide de refroidissement traversant des radiateurs (6, 33, 46), le dispositif comprend des moyens de connexion fluidique (15, 60, 61, 62) aptes à relier au moins une des branches de refroidissement (20, 22, 24) à au moins l'une des branches secondaires (37, 44, 45) et/ou à au moins l'une des branches principales (1, 2, 3) pour créer une boucle de circulation isolée du reste du circuit, une boucle de circulation reliée au reste du circuit de manière à relier une branche principale (1, 2, 3) à au moins deux branches de refroidissement (20, 22, 24) de telle sorte qu'au moins deux radiateurs sont destinés à être traversés par le fluide de refroidissement selon une situation de fonctionnement instantané du véhicule choisi parmi plusieurs modes de fonctionnement prédéterminés (M1, M2, M3, M4, M5), **caractérisé en ce que** chacune des branches secondaires (37, 44, 45) peut être reliée à l'une quelconque des branches principales (1, 2, 3) par ledit moyen de connexion fluidique (15, 60, 61, 62).

2. Dispositif selon la revendication 1, **caractérisé en ce qu'**il comprend au moins des première, second et troisième branches principales (1, 2, 3), la première branche principale (1) a une température nominale (HT) compris entre 90°C et 105°C, la seconde branche principale (2) a une température nominale (BT) compris entre 40°C et 80°C, et la troisième branche principale (3) a une température nominale (TBT) compris entre 0°C et 40°C.

3. Dispositif selon la revendication 1 ou 2, **caractérisé en ce qu'**il comprend un radiateur haute température (6), un radiateur basse température (33) et un radiateur très basse température (46) disposés respectivement dans les première, seconde et troisième branches (20, 22, 24 ) de refroidissement.

4. Dispositif selon l'une quelconque des revendications précédentes, **caractérisé en ce qu'**il comprend au moins des première, deuxième et troisième branches secondaires (37, 44, 45), chacune étant du type d'une conduite de circulation du fluide.

5. Dispositif selon l'une quelconque des revendications précédentes, **caractérisé en ce que** les modes de fonctionnement prédéterminés (M1, M2, M3, M4, M5) comprennent au moins un mode thermique pure (M1), un mode électrique pure (M2), un mode hybride (M3), un mode de recharge des batteries via un chargeur intégré (M4) au véhicule, et un mode de recharge des batteries via un chargeur externe au véhicule (M5).

6. Dispositif selon l'une quelconque des revendications précédentes, **caractérisé en ce que** chacune des branches principales (1, 2, 3) peut être reliée à plusieurs branches de refroidissement (20, 22, 24) par ledit moyen de connexion fluidique (15, 60, 61, 62), de telle sorte que les radiateurs (6, 33, 46) peuvent être utilisés en série ou en parallèle pour différents modes de fonctionnement prédéterminés (M1, M2, M3, M4, M5) du véhicule.

7. Dispositif selon l'une quelconque des revendications précédentes, **caractérisé en ce que** le moyen de connexion fluidique comprend des vannes à quatre voies (60, 61, 62) et une vanne à trois voies (V3).

8. Dispositif selon l'une quelconque des revendications précédentes, **caractérisé en ce que** le moyen de connexion fluidique (15, 60, 61, 62) est apte à relier en série ou en parallèle les première et troisième branches de refroidissement (20, 24) dans le mode de fonctionnement soit en thermique pure (M1), ou en hybride (M3) lorsque la température ambiante est supérieure à une valeur de seuil thermique comprise entre 20° et 40°C, soit en électrique pure (M2) ou en recharge des batteries via un chargeur intégré au véhicule (M4) lorsque la température de la batterie est inférieure à une valeur de seuil thermique comprise entre 40°C et 55°C afin d'utiliser uniquement le fluide caloporteur pour refroidir la batterie (40).

9. Dispositif selon l'une quelconque des revendications précédentes prise en combinaison avec la revendication 5, **caractérisé en ce que** le moyen de connexion fluidique (15, 60, 61, 62) est apte à relier en série les seconde et troisième branches de refroidissement (22, 24) dans les modes de fonctionnements en thermique pure (M1) ou en hybride (M3) lorsque une température (T3) du fluide caloporteur prélevée en sortie de la seconde branche principale (2) est supérieure ou égale à 70°C,et **en ce que** la batterie (40) est disposée dans une boucle de refroidissement indépendante mettant en série la troisième branche principale (3) avec la troisième branche secondaire (37) de sorte que seul un refroidisseur (42) de type échangeur de chaleur entre le fluide caloporteur et un fluide réfrigérant est apte à refroidir la batterie (40).

10. Dispositif selon l'une quelconque des revendications précédentes en combinaison avec la revendication 5, **caractérisé en ce que** le moyen de connexion fluidique (15, 60, 61, 62) est apte à relier en série les première et seconde branches de refroidissement (20, 22) dans le mode de fonctionnement en électrique pure (M2) ou en recharge des batteries via un chargeur intégré au véhicule (M4).

11. Dispositif selon l'une quelconque des revendications précédentes en combinaison avec la revendication 5, **caractérisé en ce que** le moyen de connexion fluidique (15, 60, 61, 62) est apte à relier la troisième branche principale (3) aux première, deuxième et troisième branches de refroidissement (20, 22, 24) lorsque le véhicule est dans un mode de fonctionnement en recharge des batteries via un chargeur externe au véhicule (M5), de telle sorte que l'ensemble des échangeurs thermiques des première et troisième branches de refroidissement sont disposées en parallèle, cet ensemble d'échangeurs thermiques étant disposé en série avec la deuxième branche de refroidissement, lorsque la température de la batterie est inférieure à une valeur de seuil thermique comprise entre 40°C et 55°C et que la température ambiante est inférieure à une valeur de seuil thermique comprise entre 20° et 40°C.

12. Dispositif selon l'une quelconque des revendications 1 à 10 en combinaison avec la revendication 5, **caractérisé en ce que** le moyen de connexion fluidique (15, 60, 61, 62) est apte à relier la deuxième branche principale (2) aux première, deuxième et troisième branches de refroidissement (20, 22, 24) lorsque le véhicule est dans un mode de fonctionnement en électrique pure (M2) ou en recharge des batteries via un chargeur intégré au véhicule (M4), de telle sorte qu'un ensemble des échangeurs thermiques des première et troisième branches de refroidissement sont disposées en parallèle, cet ensemble d'échangeurs thermiques étant disposé en série avec la deuxième branche de refroidissement, la troisième branche principale (3) étant dissociée de la deuxième branche principale de telle sorte que les batteries sont refroidies par le fluide réfrigérant, lorsque que la température ambiante est supérieure à une valeur de seuil thermique comprise entre 20° et 40°C.

## Patentansprüche

1. Vorrichtung zum Thermomanagement eines Wärmeträgerfluidkreises eines Hybridfahrzeugs, welcher Hauptzweige (1, 2, 3) aufweist, in denen jeweils mindestens ein zu kühlendes Funktionsorgan (4, 7, 8, 9, 40) angeordnet ist, wobei jeder der Hauptzweige einen Nennbetriebstemperatur-Schwellenwert aufweist, wobei die Vorrichtung sekundäre Zweige (37, 44, 45) aufweist, wobei die Vorrichtung Zweige zur Kühlung (20, 22, 24) des in dem Kreis strömenden Wärmeträgerfluids mit einem Kühlfluid, welches Kühler (6, 33, 46) durchquert, aufweist, wobei die Vorrichtung Mittel zur fluidischen Verbindung (15, 60, 61, 62) umfasst, die geeignet sind, mindestens einen der Kühlzweige (20, 22, 24) mit mindestens einem der sekundären Zweige (37, 44, 45) und/oder mit mindestens einem der Hauptzweige (1, 2, 3) zu verbinden, zum Erzeugen einer vom Rest des Kreises isolierten Zirkulationsschleife, einer mit dem Rest des Kreises auf die Weise verbundenen Zirkulationsschleife, dass ein Hauptzweig (1, 2, 3) mit mindestens zwei Kühlzweigen (20, 22, 24) verbunden ist, derart, dass mindestens zwei Kühler dazu bestimmt sind, von dem Kühlfluid durchquert zu werden, gemäß einer Situation des momentanen Betriebs des Fahrzeugs, der aus mehreren vorbestimmten Betriebsmodi (M1, M2, M3, M4, M5) ausgewählt ist, **dadurch gekennzeichnet, dass** jeder der sekundären Zweige (37, 44, 45) mit jedem beliebigen der Hauptzweige (1, 2, 3) durch das Mittel zur fluidischen Verbindung (15, 60, 61, 62) verbunden werden kann.

2. Vorrichtung nach Anspruch 1, **dadurch gekennzeichnet, dass** sie mindestens einen ersten, einen zweiten und einen dritten Hauptzweig (1, 2, 3) umfasst, wobei der erste Hauptzweig (1) eine Nenntemperatur (HT) zwischen 90 °C und 105 °C aufweist, der zweite Hauptzweig (2) eine Nenntemperatur (BT) zwischen 40 °C und 80 °C aufweist und der dritte Hauptzweig (3) eine Nenntemperatur (TBT) zwischen 0 °C und 40 °C aufweist.

3. Vorrichtung nach Anspruch 1 oder 2, **dadurch gekennzeichnet, dass** sie einen Hochtemperaturkühler (6), einen Niedertemperaturkühler (33) und einen Kühler für sehr niedrige Temperaturen (46) umfasst, die im ersten, zweiten bzw. dritten Kühlzweig (20, 22, 24) angeordnet sind.

4. Vorrichtung nach einem der vorhergehenden Ansprüche, **dadurch gekennzeichnet, dass** sie mindestens einen ersten, einen zweiten und einen dritten sekundären Zweig (37, 44, 45) umfasst, die jeweils vom Typ einer Fluidzirkulationsleitung sind.

5. Vorrichtung nach einem der vorhergehenden Ansprüche, **dadurch gekennzeichnet, dass** die vorbestimmten Betriebsmodi (M1, M2, M3, M4, M5) mindestens einen rein thermischen Modus (M1), einen rein elektrischen Modus (M2), einen Hybridmodus (M3), einen Modus der Wiederaufladung der Batterien über eine in das Fahrzeug integrierte Ladevorrichtung (M4) und einen Modus der Wiederaufladung der Batterien über eine fahrzeugexterne Ladevorrichtung (M5) umfassen.

6. Vorrichtung nach einem der vorhergehenden Ansprüche, **dadurch gekennzeichnet, dass** jeder der Hauptzweige (1, 2, 3) durch das Mittel zur fluidischen Verbindung (15, 60, 61, 62) mit mehreren Kühlzweigen (20, 22, 24) verbunden werden kann, derart, dass die Kühler (6, 33, 46) für verschiedene vorbestimmte Betriebsmodi (M1, M2, M3, M4, M5) des Fahrzeugs in Reihe oder parallel geschaltet verwendet werden können.

7. Vorrichtung nach einem der vorhergehenden Ansprüche, **dadurch gekennzeichnet, dass** das Mittel zur fluidischen Verbindung Vierwegeventile (60, 61, 62) und ein Dreiwegeventil (V3) umfasst.

8. Vorrichtung nach einem der vorhergehenden Ansprüche, **dadurch gekennzeichnet, dass** das Mittel zur fluidischen Verbindung (15, 60, 61, 62) geeignet ist, den ersten und den dritten Kühlzweig (20, 24) in Reihe oder parallel zu verbinden, entweder im rein thermischen Betriebsmodus (M1) oder im Hybridmodus (M3), wenn die Umgebungstemperatur höher als ein Temperaturschwellenwert ist, der zwischen 20 °C und 40 °C liegt, oder im rein elektrischen Modus (M2) oder im Modus der Wiederaufladung der Batterien über eine in das Fahrzeug integrierte Ladevorrichtung (M4), wenn die Temperatur der Batterie niedriger als ein Temperaturschwellenwert ist, der zwischen 40 °C und 55 °C liegt, um ausschließlich das Wärmeträgerfluid zum Kühlen der Batterie (40) zu verwenden.

9. Vorrichtung nach einem der vorhergehenden Ansprüche in Kombination mit Anspruch 5, **dadurch gekennzeichnet, dass** das Mittel zur fluidischen Verbindung (15, 60, 61, 62) geeignet ist, den zweiten und den dritten Kühlzweig (22, 24) im rein thermischen Betriebsmodus (M1) oder im Hybridmodus (M3) in Reihe zu verbinden, wenn eine Temperatur (T3) des am Ausgang des zweiten Hauptzweiges (2) entnommenen Wärmeträgerfluids größer oder gleich 70 °C ist, und dadurch, dass die Batterie (40) in einer unabhängigen Kühlschleife angeordnet ist, die den dritten Hauptzweig (3) mit dem dritten sekundären Zweig (37) in Reihe verbindet, so dass nur ein Kühler (42) vom Typ eines Wärmetauschers zwischen dem Wärmeträgerfluid und einem Kältemittel in der Lage ist, die Batterie (40) zu kühlen.

10. Vorrichtung nach einem der vorhergehenden Ansprüche in Kombination mit Anspruch 5, **dadurch gekennzeichnet, dass** das Mittel zur fluidischen Verbindung (15, 60, 61, 62) geeignet ist, den ersten und den zweiten Kühlzweig (20, 22) im rein elektrischen Betriebsmodus (M2) oder im Modus der Wiederaufladung der Batterien über eine in das Fahrzeug integrierte Ladevorrichtung (M4) in Reihe zu verbinden.

11. Vorrichtung nach einem der vorhergehenden Ansprüche in Kombination mit Anspruch 5, **dadurch gekennzeichnet, dass** das Mittel zur fluidischen Verbindung (15, 60, 61, 62) geeignet ist, den dritten Hauptzweig (3) mit dem ersten, zweiten und dritten Kühlzweig (20, 22, 24) zu verbinden, wenn sich das Fahrzeug im Betriebsmodus der Wiederaufladung der Batterien über eine fahrzeugexterne Ladevorrichtung (M5) befindet, derart, dass die Wärmetauscher des Satzes der Wärmetauscher des ersten und des dritten Kühlzweiges parallel angeordnet sind, wobei dieser Satz von Wärmetauschern in Reihe mit dem zweiten Kühlzweig angeordnet ist, wenn die Temperatur der Batterie niedriger als ein Temperaturschwellenwert ist, der zwischen 40 °C und 55 °C liegt, und wenn die Umgebungstemperatur niedriger als ein Temperaturschwellenwert ist, der zwischen 20 °C und 40 °C liegt.

12. Vorrichtung nach einem der Ansprüche 1 bis 10 in Kombination mit Anspruch 5, **dadurch gekennzeichnet, dass** das Mittel zur fluidischen Verbindung (15, 60, 61, 62) geeignet ist, den zweiten Hauptzweig (2) mit dem ersten, zweiten und dritten Kühlzweig (20, 22, 24) zu verbinden, wenn sich das Fahrzeug im rein elektrischen Betriebsmodus (M2) oder im Modus der Wiederaufladung der Batterien über eine in das Fahrzeug integrierte Ladevorrichtung (M4) befindet, derart, dass die Wärmetauscher eines Satzes von Wärmetauschern des ersten und des dritten Kühlzweiges parallel angeordnet sind, wobei dieser Satz von Wärmetauschern in Reihe mit dem zweiten Kühlzweig angeordnet ist, wobei der dritte Hauptzweig (3) vom zweiten Hauptzweig getrennt ist, derart, dass die Batterien durch das Kältemittel gekühlt werden, wenn die Umgebungstemperatur höher als ein Temperaturschwellenwert ist, der zwischen 20 °C und 40 °C liegt.

## Claims

1. Thermal management device of a heat-transfer fluid circuit of a hybrid vehicle having main branches (1, 2, 3) in each of which is disposed at least one functional member (4, 7, 8, 9, 40, ) to be cooled, each of the main branches having a nominal operating temperature threshold, the device having secondary branches (37, 44, 45), the device having cooling branches (20, 22, 24) for cooling the heat-transfer fluid circulating in the circuit with a cooling fluid passing through radiators (6, 33, 46), the device comprises fluidic connection means (15, 60, 61, 62) that are able to connect at least one of the cooling branches (20, 22, 24) to at least one of the secondary branches (37, 44, 45) and/or to at least one of the main branches (1, 2, 3) to create a circulation loop that is isolated from the rest of the circuit, a circulation loop that is connected to the rest of the circuit so as to connect a main branch (1, 2, 3) to at least two cooling branches (20, 22, 24) such that at least two radiators are intended to be passed through by the cooling fluid in a situation of instantaneous operation of the vehicle chosen from among a plurality of predetermined operating modes (M1, M2, M3, M4, M5), **characterized in that** each of the secondary branches (37, 44, 45) can be connected to any one of the main branches (1, 2, 3) by said fluidic connection means (15, 60, 61, 62) .

2. Device according to Claim 1, **characterized in that** it comprises at least first, second and third main branches (1, 2, 3), the first main branch (1) has a nominal temperature (HT) of between 90°C and 105°C, the second main branch (2) has a nominal temperature (BT) of between 40°C and 80°C, and the third main branch (3) has a nominal temperature (TBT) of between 0° and 40°C.

3. Device according to Claim 1 or 2, **characterized in that** it comprises a high-temperature radiator (6), a low-temperature radiator (33) and a very-low-temperature radiator (46) that are disposed respectively in the first, second and third cooling branches (20, 22, 24).

4. Device according to any one of the preceding claims, **characterized in that** it comprises at least first, second and third secondary branches (37, 44, 45), each being of the fluid circulation duct type.

5. Device according to any one of the preceding claims, **characterized in that** the predetermined operating modes (M1, M2, M3, M4, M5) comprise at least a pure thermal mode (M1), a pure electric mode (M2), a hybrid mode (M3), a mode (M4) for recharging the batteries via a charger integrated in the vehicle, and a mode (M5) for recharging the batteries via a charger external to the vehicle.

6. Device according to any one of the preceding claims, **characterized in that** each of the main branches (1, 2, 3) can be connected to a plurality of cooling branches (20, 22, 24) by said fluidic connection means (15, 60, 61, 62), such that the radiators (6, 33, 46) can be used in series or in parallel for various predetermined operating modes (M1, M2, M3, M4, M5) of the vehicle.

7. Device according to any one of the preceding claims, **characterized in that** the fluidic connection means comprises four-way valves (60, 61, 62) and a three-way valve (V3).

8. Device according to any one of the preceding claims, **characterized in that** the fluidic connection means (15, 60, 61, 62) is able to connect in series or in parallel the first and third cooling branches (20, 24) in either the pure thermal operating mode (M1) or the hybrid operating mode (M3) when the ambient temperature is greater than a thermal threshold value of between 20° and 40°C, either the pure electric mode (M2) or the mode (M4) for recharging the batteries via a charger integrated in the vehicle when the temperature of the battery is below a thermal threshold value of between 40°C and 55°C in order to use only the heat-transfer fluid to cool the battery (40).

9. Device according to any one of the preceding claims taken in combination with Claim 5, **characterized in that** the fluidic connection means (15, 60, 61, 62) is able to connect in series the second and third cooling branches (22, 24) in the pure thermal operating mode (M1) or the hybrid operating mode (M3) when a temperature (T3) of the heat-transfer fluid taken at the outlet of the second main branch (2) is greater than or equal to 70°C, and **in that** the battery (40) is disposed in an independent cooling loop placing the third main branch (3) in series with the third secondary branch (37) such that only a cooler (42) of the type exchanging heat between the heat-transfer fluid and a refrigerant fluid is able to cool the battery (40).

10. Device according to any one of the preceding claims in combination with Claim 5, **characterized in that** the fluidic connection means (15, 60, 61, 62) is able to connect in series the first and second cooling branches (20, 22) in the pure electric operating mode (M2) or the mode (M4) for recharging the batteries via a charger integrated in the vehicle.

11. Device according to any one of the preceding claims in combination with Claim 5, **characterized in that** the fluidic connection means (15, 60, 61, 62) is able to connect the third main branch (3) to the first, second and third cooling branches (20, 22, 24) when the vehicle is in an operating mode (M5) for recharging the batteries via a charger external to the vehicle, such that all of the heat exchangers of the first and third cooling branches are disposed in parallel, this set of heat exchangers being disposed in series with the second cooling branch, when the temperature of the battery is below a thermal threshold value of between 40°C and 55°C and the ambient temperature is below a thermal threshold value of between 20° and 40°C.

12. Device according to any one of Claims 1 to 10 in combination with Claim 5, **characterized in that** the fluidic connection means (15, 60, 61, 62) is able to connect the second main branch (2) to the first, second and third cooling branches (20, 22, 24) when the vehicle is in a pure electric operating mode (M2) or a mode (M4) for recharging the batteries via a charger integrated in the vehicle, such that a set of the heat exchangers of the first and third cooling branches are disposed in parallel, this set of heat exchangers being disposed in series with the second cooling branch, the third main branch (3) being separate from the second main branch such that the batteries are cooled by the refrigerant fluid, when the ambient temperature is above a thermal threshold value of between 20°C and 40°C.
